# EUROPEAN PATENT APPLICATION

(11) **EP 4 141 706 A1**
(43) Date of publication of application: **01.03.2023**
(21) Application number: 21194012.7
(22) Date of filing: 31.08.2021
(51) Int. Cl.: G06F 16/901, G06F 16/906, G06Q 10/00

(54) **METHOD OF ORDERING MEMBERS WITHIN A GROUP OF PRODUCTS OR PROCEDURES**

(71) Applicant: Siemens Industry Software Inc., Plano, TX 75024 (US)
(72) Inventor: Trythall, Steven, Pwllheli, LL53 6SW (GB); Askar, Muhammad, Sale, M33 4WY (GB); Eastwood, Tony, Penrhynduedraeth, LL48 6BT (GB)
(74) Representative: Maier, Daniel Oliver

(57) **Abstract**

A computer-implemented method of ordering members within a group of products or procedures based upon a relative weighting of a cost attribute associated with each member is disclosed. The group comprising *n* orthogonal members arranged in an initial order. A first pair of members of the group is selected and a relative weighting apportioned to the members based upon data from the end of the most recent historical time period. The data is assumed to represent close to an optimum ordering of the members of the group for a current time period, and the relative weighting determines the ordering within the pair. Any members of the group remaining that are not selected in the first pair, are left in their initial order. A data-processing system and computer-program product is also disclosed.

## Description

### FIELD OF THE INVENTION

The present invention relates to a method of ordering members within a group of products or procedures, based upon a relative weighting of a cost attribute associated with each member, wherein the group comprises n members arranged in an initial order.

### BACKGROUND OF THE INVENTION

Case-based reasoning, also known as CBR, is a methodology used in problem solving that relies on the premise that the process of solving new problems may be based on the solution of similar problems in the past. As such, it is an example of analogy solution making, and is used purposefully or inadvertently in many everyday procedures. For example, when a car is taken to a garage with a particular fault, a mechanic may deal with the fault by using details remembered from a car exhibiting similar issues, thus subconsciously utilizing informal, personal CBR without realising. As described in the description below, the use of CBR-type methodologies can be very helpful in considering the ordering of procedures and process-steps in a fault diagnosis and repair situation. Traditionally, computer-implemented CBR for solving a specific and identified problem is broken down into four steps: RETRIEVE, REUSE, REVISE and RETAIN. In the RETRIEVE step, any cases relevant to solving the identified problem are retrieved from memory. The case comprises the problem, its solution and information pertaining to how the problem was solved on that particular occasion. REUSE involves mapping the solution from the retrieved case to the new, identified problem at hand. REVISE is the test stage, where the previous solution is tested against the new, identified problem, and revised as necessary. Finally, RETAIN requires that the solution to the new, identified problem, and any adaptations or revisions necessary during its solution are stored as a new case ready for when the next similar problem is identified.

Taking the example of car repairs above, when a car develops a fault, it is taken to a garage where a mechanic must determine what is causing the fault and fix that root cause. A simple fault would be that a brake light does not illuminate when the brake pedal is pressed, for which there are three probable causes: the brake light switch connected to the brake pedal is not working; the light bulb in the brake light is broken; or the fuse for the brake light is broken. Therefore, there are three sets of diagnostics that are required, where each is a defined procedure to try to determine the fault, a test to check that the cause of the fault has been found, and a part that requires replacement to rectify the fault.

In this example, the light does not illuminate because the brake light switch is not working. Ideally the first procedure run by the mechanic would identify an actual fault - there would be no need to run the other two diagnostics. However, the mechanic uses the reference manual, which tells him to check the light bulb first, but if the bulb is sound and working, to next check the fuse. The mechanic is given a list of items to check in a specific order. To check the bulb, the mechanic removed the brake light housing and then the bulb, which cost the mechanic thirty minutes of time during which a solution was not found. The next diagnostic that was carried out was to test the fuse, which required access to the relevant fuse box under the boot lining of the vehicle. Again, this did not detect the fault, and cost the mechanic a further ten minutes of time. Finally, the mechanic undertook the brake light switch diagnostic, which was the last item on the list, and found the fault and replaced the switch, taking forty-two minutes. Overall, forty minutes of time was wasted in rectifying the fault.

Using CBR would have helped the mechanic considerably, as in this particular scenario, the light bulbs rarely fail, and neither do the fuses. CBR would have determined that it was optimal to check the brake switch first. Using the computer-implemented CBR methodology described above, each permutation of the three diagnostic tests would have been reviewed against previous incidents of the same fault, leading to a total of six possible orders of the three diagnostic tests. Whilst this is a small number, for faults where there are a large number, n, of diagnostic tests, the value of *n!* indicating the number of permutations of these diagnostic tests will increase quickly. In the car repair problem whilst using traditional CBR may make this process easier and save on some computing cost, the major limiting factor of using these techniques is the need to compute n! permutations, even in a reduced metric *N*-dimensional space.

Whilst the car repair scenario is one situation where existing CBR techniques could be useful with sufficient computing resources, there are also other examples, such as the ordering of items on supermarket shelves based on the proximity to the entrance, or steps in medical diagnostic procedures. However, as the underlying problems become more complex, either due to technology changes or volumes of data, utilising existing CBR techniques becomes unattractive for many applications. There is therefore a need for a modified CBR technique that offers the benefits of traditional CBR in determining the order of items or procedures, but with a reduced computing time and data cost.

### SUMMARY OF THE INVENTION

Embodiments of the present invention aim to address these issues by providing, in a first aspect, a computer-implemented method of ordering members within a group of products or procedures based upon a relative weighting of a cost attribute associated with each member, the group comprising n members arranged in an initial order, the method comprising the steps of: a) selecting a first pair of members from the group; b) retrieving data, from a data source, that indicates the order of the first pair at the end of the most recent historical time period containing relevant data based upon the-cost attributes associated with each member observed during said historical time period and selecting this as an optimum order for a current time period; c) calculating a relative weight for each of the first pair using the data from the most recent historical time period; d) ordering the first pair based upon the calculated relative weight; and e) if there are any members of the group remaining that are not selected in the first pair, maintaining the initial order of the group for such members; wherein each member of the group is the owner of orthogonal historical data.

By taking a relative weighting approach in conjunction with data from the most recent historical time period and ensuring that the data is formed from statistically orthogonal members of a group, the computing costs of providing a list of group members in an optimum order is much reduced when compared with more traditional CBR methodology.

Preferably, calculating the relative weighting comprises analysing the retrieved data and determining the total list cost order for each possible order of the first pair.

Preferably, the ordering of the first pair comprises selecting the lowest list cost order.

The method may further comprise the steps of: f) selecting at least a second pair of members from the group; and g) repeating steps b) to e) for the at least second pair of members; wherein the relative weight of the members of the first pair and the relative weight of the members of the at least second pair are independent of one another.

The cost attribute of the members of the group may be time.

The most recent historical time period containing relevant data may be chosen from one of: a historical time-period comprising the most frequent occurrence of the members of the pair; or a historical time period comprising an absolute number of occurrences of the members of the pair may be used.

When each member of the group is a procedure, the process may comprise at least one step taken to detect a fault in a device.

Preferably, the data source is a database and the retrieved data comprises information regarding the time taken to carry out the at least one step of each procedure.

The method may further comprises the step of: (h) carrying out steps (a) to (e) for the first pair and steps (f) and (g) for the at least second pair in parallel.

In a second aspect, embodiments of the present invention also provide a data-processing system adapted to order members within a group of products or procedures based upon a relative weighting of a cost attribute associated with each member, the group comprising n members arranged in an initial order, the data-processing system comprising: a memory device configured to store data and to act as a data source; a processor in communication with the memory device and adapted to select a first pair of members from the group; retrieve data, from a data source, that indicates the order of the members in the first pair at the end of the most recent historical time period containing relevant data based upon the cost attributes associated with each member observed during said historical time period; calculate a relative weight for each of the members of the first pair using the data from the most recent historical time period; order the first pair based upon the calculated relative weight; and if there are any members of the group remaining that are not selected in the first pair, maintain the initial order of the group for such members; a user display device in communication with the processor; and a data-collector client in communication with the processor and the memory device and configured to feed data to be stored in the memory device; wherein each member of the group is the owner of orthogonal historical data.

Preferably, the memory device comprises a database.

In a third aspect, embodiments of the present invention also provide a computer program product containing instructions which, when executed on the processor of a data-processing device, causes the processor to carry out the steps of the method outlined above.

### BRIEF DESCRIPTION OF THE DRAWINGS

The present invention will now be described by way of example only, and with reference to the accompanying drawings, in which:
Figure 1 shows curves illustrating the values of n! and nlog(n) for increasing values of *n*;
Figure 2 is a flowchart illustrating the steps in a computer-implemented method of ordering members within a group of products or procedures in accordance with embodiments of the present invention; and
Figure 3 is a schematic diagram illustrating a data-processing system in accordance with embodiments of the present invention.

### DETAILED DESCRIPTION

The following terms in the description shall be taken to have the meanings:
Orthogonal: when the behaviour of one item of data in a list does not affect the behaviour of any other items in the list, each item in the list is the owner of orthogonal data;
Relative Weight: weighting between two members of a pair selected from a group that is independent of any other member of the group;
Absolute Weight: weighting calculated in isolation for any member of the group using an arbitrary mathematical weighting function set up across the n dimensional space;
Cost: a negative attribute relating to time, financial cost, risk.

In order to avoid the n combinatorial limitations of traditional CBR and the search for an elusive mathematical weighting function the embodiments of the present invention concentrate entirely on the determination of an optimal order of items or procedures without referring to an N-dimensional space. This optimal order can be determined using the relative weighting of items in a list. In addition, the complexity of solving the problem of optimal ordering is reduced by using the relative weighting.

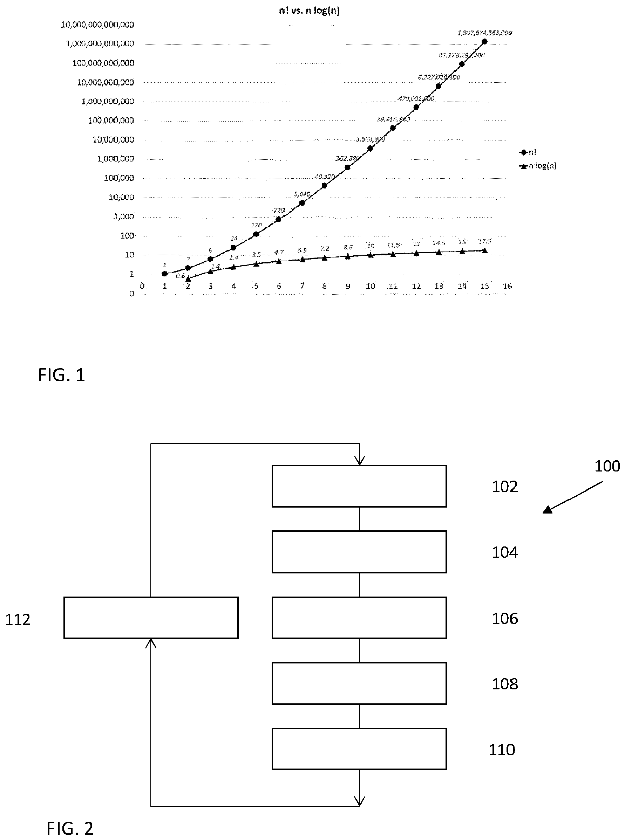

Figure 1 shows curves illustrating the values of n! and nlog(n) for increasing values of n. This serves as a simple comparison between existing traditional sorting methods and the method used in the embodiments of the present invention below. Typically, sorting is traditional simple sorting, such as alphabetical sorting of text strings, where nlog(n) pairs of strings are sorted, or traditional complex sorting, such as sorting a set of objects with complex characteristics. In the embodiments of the present invention, objects having complex characteristics are sorted using a relative weight against traditional simple sorting.

The computational cost of the traditional CBR methods looking at n items and operating in N-dimensional space are, at best, *n*² but often is n!. When addressing the critical question "what is the optimum order of the following five members of a group, A, B, C, D, E?" traditional CBR techniques would ask a series of questions:
- Should A be placed before B?
- Should B be placed before C?
- If A is placed before B, and B is placed before C, should A be placed before C?

And so on, until all n! permutations, where n = 5 of the ordering of A, B, C, D, E have been considered. In contrast, the embodiments of the present invention described below determine the order of any pair of items in the group without reference to the remaining members of the group. Using the example of finding an optimum order of the five group members A, B, C, D, E, for the pair A and B, only the questions:
- Should A be placed before B?
- Should B be placed before A?
are asked with reference to a specific set of historical data. The relative weight of members in a pair is valid only for the two members of the pair. The relative weight is also therefore independent of the other members of the group that are not within the pair. This method of ordering only works when the data behind the determination of the ordering is orthogonal for all of the items in the list. Historical data is a specific instance of orthogonal data, where the behaviour of one item of data in the list does not affect the behaviour of any other items in the list. If we consider the example above, the assumption is that all three possible points of failure are independent of one another, and therefore orthogonal. If, however, a failing bulb also causes the fuse to fail, then the behaviour of the bulb and the fuse is not independent and therefore not orthogonal. Each member of the group (the light bulb, the fuse, the switch) is therefore the owner of orthogonal data.

The order of the five group members at the end of the most recent historical time period is assumed to be as close as possible to optimum for the current time period. The current time period will, by definition, have no data.

Determining the order of a list using a computer is often done by an implementation of the Quicksort algorithm. The Quicksort algorithm performs its sort by asking a number of pairs of items in a list to supply a relative order. The embodiments of the present invention can supply this relative ordering natively. In comparison, traditional CBR and traditional sorting would require that we calculate an absolute metric value for every item in the list and then compare them. But it is the calculation of the absolute metric value that is incredibly difficult because there is no natural mathematic solution to the ordering problem. The best order of the list today is simply the best order we could have had yesterday or some other recent historical time period. For any list with a number of items it is possible to consider all the permutations of the items as one permutation from a historical time period, such as the most recent time period (for example, yesterday) must have been optimal. However, if all permutations are considered, this leads to *n*! calculations, whereas if only relative weighting is considered, *n*log(n) calculations are required.

The following embodiments address the issue of ordering members of a group by taking the example of vehicle repairs, however the methods outlined are equally applicable to all types of complex devices that provide a set of functions that are reliant on component parts, such as vehicles, aeroplanes, power generation and distribution, medical devices and diagnostics, where an ordered set of procedures or procedures steps is required to reinstate the function after failure, as well as to scenarios where individual items, such as products in a supermarket, require ordering for a given reason.

In order to illustrate the concept of relative weighting, in a first example, eight members of a group, A, B, C, D, E, F, G, H, each being the owner of orthogonal data, are considered. Using a traditional CBR approach, there are 40,320 possible permutations of the order of these eight group members as *n* = 8. However, by breaking down the group into pairs of members, where, in this example, each pair is a pair of members such as D and E, a much simpler question of whether D should come first or E should come first may be answered based on data from a recent historical time period that has been identified as containing relevant data. Taking the cost attribute to be the time (in minutes) taken to attain the resolution, historical data gives the following information (where if the appropriate resolution was found, the procedure terminates) in answer to the question "should D be placed before E or E be placed before D for the most efficient solution to the posed problem". It can be seen that D solves the problem on average in 26 minutes, whereas E solves the problem on average in 175 minutes, but that there may be an advantage to performing D before E and *vice versa* that needs to be determined.

**Table 1: Example of historical data for ordering within a pair**

| Procedure run | 1^{st} Attempt | Time (Min) | 2^{nd} Attempt | Time(Min) | 3^{rd} Attempt | Time (Min) | Total Time to Resolve Problem (Min) |
|---|---|---|---|---|---|---|---|
| 1 | D | 20 | | | | | 20 |
| 2 | D | 30 | | | | | 30 |
| 3 | D | 30 | | | | | 30 |
| 4 | D | 20 | E | 150 | | | 170 |
| 5 | D | 30 | E | 150 | | | 180 |
| 6 | D | 20 | E | 200 | C | 769 | 989 |
| 7 | D | 30 | E | 200 | C | 1280 | 1510 |
| | D Total Time: | 180 min | E Total Time: | 700 min | Total D+E | 880 min | |
| | D Average Time: | 26min | E Average Time | 175 min | Total E+D | 1325 min | |

Starting with the proposition that D should be placed before E, there are three procedure runs (1, 2 and 3) where D correctly resolves the problem on the first attempt without the need for further procedures. There are four procedure runs (4, 5, 6 and 7) where this is not the case, and E is carried out. On two occasions, runs 4 and 5, D fails to resolve the problem on the first attempt but E correctly resolves the problem on the second attempt. There are however also two occasions where both D and E fail to resolve the problem, and only on the third attempt, C correctly resolves the problem. So, for D to be carried out first and placed before E, the total time taken for D is 180 minutes and the total time taken for E is 700 minutes, making the total time for both D + E 880 minutes. However, it may be that actually the proposition should be that E is placed before D, in which case there is no data for procedure runs 1, 2 and 3, since E was not required to solve the problem. For these missing data points the average time taken for E is used - 175 minutes - hence the time taken for E + D is given by (3x175) + 700 + (180-50) = 1325 minutes. This is because the time taken for D is adjusted for the two runs (4 and 5) where D would not need to be run if E was successful. Clearly placing D before E is more efficient. This however only results in the relative positions of D and E, therefore all of the other members of the group remain in their original order. No decision is made about the ordering of C with respect to D and E individually, only that C should proceed after both D and E have been carried out.

Using a relative weighting therefore lowers the computing cost of determining an optimum order in terms of both the resources required (memory, processing power) and the time taken to arrive at the optimum permutation. However, by further enhancing the data used to determine the optimum order it is possible to reduce the computing costs yet further. Whilst CBR utilises all available historical data, embodiments of the present invention use data from a recent historical time period, preferably the most recent historical time period containing relevant data immediately preceding the determination of an optimum order of members of a pair of a group. This means that the time-period is flexibly and automatically chosen to make the most sense to the current ordering requirements. For example, the first seat heater problem at the beginning of winter would require that the most recent historical time-period was one in which the same problem occurred, which would be last winter. It may be preferable to consider the time-period with the most frequent number of related incidents (five times per week for instance), or it may be preferably to consider an absolute number of incidents (the previous five times a fault happened). It may be desirable therefore to choose one of historical time-period comprising the most frequent occurrence of the members of the pair or a historical time period comprising an absolute number of occurrences of the members of the pair. Once this data set has been selected, all other data is ignored. The duration of the recent historical time period is also chosen to avoid Nyquist effects relating to the timescales over which changes in the data occur.

Embodiments of the present invention use the assumption that the order of members of the group at the end of the most recent historical time period containing relevant data represents a good likelihood of being the optimum order of the members of the group. Therefore, starting from this basis, the data set required is only that from this most recent historical time period. This defines an initial order of the members of the group, enabling the selection of at least a first pair of members for ordering. Table 2 below illustrates a series of simulations of ordering of four members of a group, each owning orthogonal data, using the techniques outlined above to achieve an optimum order. The Simulated Order represents a real-life ordering of events A, B, C, D, based upon a cost attribute (time) associated with each member of the group. The Relative Weighted Historical Data Order is the order determined using the embodiments of the present invention, asking the question whether it is better to carry out event A first or event C first:

**Table 2: Comparison of optimum ordering**

| Day | Order | Simulated Order | Relative Weighted Historical Data Order |
|---|---|---|---|
| 1 | ADCB | | |
| 2 | ACDB | CABD | ACBD |
| 3 | ABDC | ACBD | CABD |
| 4 | ACBD | ACBD | CABD |
| 5 | BCAD | CABD | ACBD |
| 6 | ACBD | CABD | CABD |
| 7 | DBCA | CABD | CABD |
| 8 | BADC | CABD | ACBD |
| 9 | ABCD | ACBD | CABD |
| 10 | ADCB | CABD | ACBD |
| 11 | DCBA | CABD | CABD |
| 12 | | CABD | CABD |

It can be seen that the relative weighted historical data approach tends to follow the ordering of the previous day as the optimum order with certain exceptions: day 4, for example. In this example the data was set up to determine whether or not the methods of the embodiments of the present invention would determine a different order to that of the most recent historic time period based upon the observed events. The data used to calculate days 2 and 3 is shown here as an example.

**Table 3: Extract of data used to construct Table 2**

| 1^{st} Attempt | Time (Min) | 2^{nd} Attempt | Time (Min) | 1^{st} Attempt | Time (Min) | 2^{nd} Attempt | Time (Min) |
|---|---|---|---|---|---|---|---|
| C | 316 | A | 506 | C | 132 | A | 326 |
| C | 742 | A | 384 | C | 616 | A | 342 |
| C | 791 | A | 711 | C | 518 | A | 231 |
| C | 775 | | | C | 606 | | |
| C | 350 | | | C | 718 | | |
| C | 921 | | | C | 1009 | | |
| C Total Time: | 3895 min | A Total Time: | 1601 min | C Total Time: | 3599 min | A Total Time: | 899 min |
| C Average Time: | 650 min | A Average Time | 533 min | C Average Time: | 600 min | A Average Time | 300 min |
| Total C+A | 5496 min | | | Total C+A | 4498 min | | |
| Total A+C | 7097 min | | | Total A+C | 5397 min | | |

Using the methodology outlined above in relation to Table 1 and including averages of existing data to provide theoretical times where data is missing reveals that on both days it is more efficient to run D before E. Therefore, where data for a group member is absent as the problem has already been solved, using an average of the existing data from the recent historical time period containing relevant data for that group member enables the cost calculation to be completed.

In order to illustrate the invention further, the following embodiments take the example of vehicle repair, each time a vehicle requires a repair it is necessary for a mechanic to determine the cause of a fault. The fault is caused by the failure of a part responsible for a function, such as the movement of an electric window. A diagnostic plan is required to determine which part is at fault, with each diagnostic plan comprising a number of steps. Each step is a procedure for testing a part to determine whether or not it is the cause of the fault, and the ordering of the procedures will determine how long it will take to find and remedy the fault. Therefore, the procedures form a group, with each procedure being a member of the group. Each procedure is statistically or deterministically independent of other procedures. This means that a procedure to test a cause of a fault due to a first part is not related to or affected by a procedure to test a cause of the same fault due to a second, different, part, making the members of the group owners of orthogonal data.

Each procedure has a cost attribute associated with it, such as the time it takes for the procedure to be carried out. Data is stored as a data set with these particular attributes and gathered from the work the mechanic does every day. For example, the mechanic carries a tablet or other portable computing device that is in communication with a server, such as a cloud server, which hosts not only a library of procedures but a data lake or database of information relating to past procedures. Each time a procedure is carried out the time taken for the procedure and its success in determining the fault and identifying the part to be replaced or repaired is logged, so that for each procedure a historical picture of the cost attribute associated with the procedure is available. This provides the basis of the data for the most recent historical time period containing relevant data required to determine the optimum order for a series of procedures in a current time period. The work required may then be scheduled, costings worked out and number of repairs and parts for the current time period calculated. For a mechanic, the ordering procedures of the embodiments of the present invention takes place at the beginning of the working day, enables the full day to be planned. However, in other scenarios the cost may be financial or risk-based, as defined above. The method steps required to enable this in accordance with various embodiments will now be described.

Figure 2 is a flowchart illustrating the steps in a computer-implemented method of ordering members within a group of products or procedures in accordance with embodiments of the present invention. Each procedure that a mechanic can use to determine the identity of a part causing a fault is a member of the group of procedures. Since each procedure is independent of each other procedure, the members of the group are owners of orthogonal data and arranged in an initial order. Each procedure has a cost attribute associated with it (the time taken to carry out the procedure). The method 100 comprises a number of steps, starting with selecting a first pair of members from the n members of the group at step 102. Here two procedures are selected from the group in order to answer the question of which should be performed first, in order to determine the optimum ordering of the procedures in the selected pair for a current time period. At step 104, data is retrieved, from a data source, that indicates the order of the members in the first pair at the end of the most recent historical time period containing relevant data based upon the cost attributes associated with each member observed during said historical time period. For a mechanic looking at vehicle repairs having a fault in which data is available for yesterday, the most recent historical time period containing relevant data is yesterday, therefore the order of the procedures in the selected pair at the end of yesterday is selected as close to an optimum order for the current time period - today.

Step 106 comprises calculating a relative weight for the first pair using the order and observed cost attributes associated with each of the members of the first set contained in the retrieved data. As described above, calculating the relative weighting comprises analysing the retrieved data and determining the total list cost order for each possible order of the members in the first pair, and selecting the lowest list cost order. In this example, the total time taken for carrying out the first member followed by the second member and the second member followed by the first member is determined based upon the data from the most recent historical time period.

Once this has been done, at step 108 the first pair is ordered based upon the calculated relative weight. At step 110 since only the ordering of the pair is of interest, the ordering of all other members of the group remains unchanged. However, the method may be repeated at step 112 by selecting a second pair of members from the group and repeating steps 102 to 110 for the second pair of members. This is possible since the relative weight of the members of the first pair and the relative weight of the members of the second pair are independent of one another. This independence also enables the processing of the method steps for different pairs to be carried out in parallel, for example, in parallel processor cores, parallel processors in a data-processing system or processors in parallel data-processing systems or devices, such as in a farm. It is important to note that the ordering within the first pair remains the same. The method of selecting pairs of members may be repeated until the entire group has been ordered. In the example above, this therefore results in ordering all of the procedures within the group, giving the mechanic a procedure listing in the order of lowest cost. Preferably, the group comprises n members, where n is greater than or equal to two, such that the relative weight of the members of the pair is independent of any members of the group remaining that are not selected in the first pair.

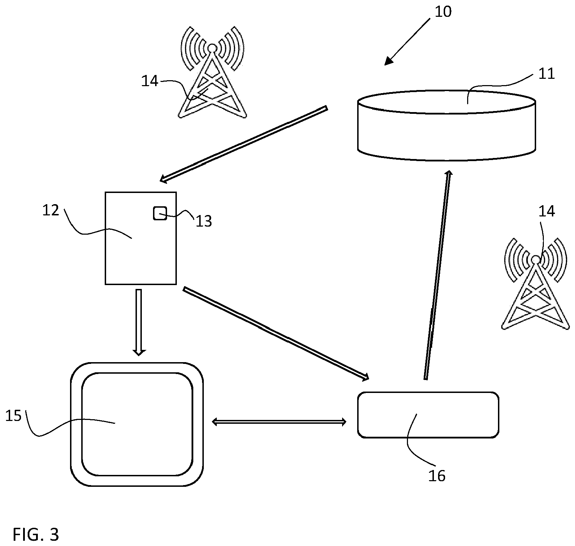

Figure 3 is a schematic diagram illustrating a data-processing system in accordance with embodiments of the present invention. The data-processing system 10 comprises a database 11 that acts as a memory device configured to store data and to act as a data source. The database 11 may be either stored on a physical server or utilise a cloud-server system. In communication with the database 11 is a processor 12 adapted carry out the steps of the method outlined in Figure 2 above. The processor 12 is preferably connected to a wireless interface controller 13, enabling communication with the database 11 over a network 14. The processor 12 is also in communication with a user display 15, via a graphics card, for example, and a data collector 16, in the form of a smart client that logs data silently and unobtrusively, and usually without the need for user interaction, during historical time periods. It is also possible to include new data, for example, a new repair or procedure, to the smart client. The user display 15 may also interact with the data collector 16 if a touchscreen is provided to enable manual recording of data. The data collector 16 feeds back data to the database 11 also via the network 14, enabling the processor 12 to access data for the most recent historical time period containing relevant data each time an optimised order is required. The database 11 holds the data in groups of orthogonal data owners, where each member has a cost attribute associated with it. A computer-language coded version of the methods of the embodiments outlined above forms a computer program product containing instructions which, when executed on the processor of the data-processing device, cause the data-processing device to carry out the steps of those methods. Whilst in the examples above each member of a group is a procedure, it may be preferable to use the methods of the embodiments of the present invention to calculate the ordering of individual method steps or of products.

## Claims

1. Computer-implemented method of ordering members within a group of products or procedures based upon a relative weighting of a cost attribute associated with each member, the group comprising n members arranged in an initial order, the method comprising the steps of:
a) selecting a first pair of members from the group;
b) retrieving data, from a data source, that indicates the order of the first pair at the end of the most recent historical time period containing relevant data based upon the cost attributes associated with each member observed during said historical time period and selecting this as an optimum order for a current time period;
c) calculating a relative weight for each of the first pair using the data from the most recent historical time period;
d) ordering the first pair based upon the calculated relative weight; and
e) if there are any members of the group remaining that are not selected in the first pair, maintaining the initial order of the group for such members;
wherein each member of the group is the owner of orthogonal historical data.

2. Method as claimed in claim 1, wherein calculating the relative weighting comprises analysing the retrieved data and determining the total list cost order for each possible order of the first pair.

3. Method as claimed in claim 2, wherein the ordering of the first pair comprises selecting the lowest list cost order.

4. Method as claimed in claim 3, further comprising the steps of:
f) selecting at least a second pair of members from the group; and
g) repeating steps b) to e) for the at least second pair of members;
wherein the relative weight of the members of the first pair and the relative weight of the members of the at least second pair are independent of one another.

5. Method as claimed in claim 1, wherein the cost attribute of the members of the group is time.

6. Method as claimed in claim 1, wherein the most recent historical time period containing relevant data is chosen from one of: a historical time-period comprising the most frequent occurrence of the members of the pair; a historical time period comprising an absolute number of occurrences of the members of the pair.

7. Method as claimed in claim 1, wherein when each member of the group is a procedure, the procedure comprises at least one step taken to detect a fault in a device.

8. Method as claimed in claim 7, wherein the data source is a database and the retrieved data comprises information regarding the time taken to carry out the at least one step of each procedure.

9. Method as claimed in claim 4, further comprising the step of:
(h) Carrying out steps (a) to (e) for the first pair and steps (f) and (g) for the at least second pair in parallel.

10. Data-processing system adapted to order members within a group of products or procedures based upon a relative weighting of a cost attribute associated with each member, the group comprising n members arranged in an initial order, the data-processing system comprising:
a memory device configured to store data and to act as a data source;
a processor in communication with the memory device and adapted to select a first pair of members from the group; retrieve data, from a data source, that indicates the order of the members in the first pair at the end of the most recent historical time period containing relevant data based upon the cost attributes associated with each member observed during said historical time period; calculate a relative weight for each of the members of the first pair using the data from the most recent historical time period; order the first pair based upon the calculated relative weight; and if there are any members of the group remaining that are not selected in the first pair, maintain the initial order of the group for such members;
a user display device in communication with the processor; and
a data-collector client in communication with the processor and the memory device and configured to feed data to be stored in the memory device;
wherein each member of the group is the owner of orthogonal historical data.

11. Data-processing system as claimed in claim 10, wherein the memory device comprises a database.

12. A computer program product containing instructions which, when executed on the processor of a data-processing device, causes the processor to carry out the steps of any of claims 1 to 9.
